Europäisches Patentamt

European Patent Office

Office européen des brevets

(11) Veröffentlichungsnummer: 0 199 037
A2

# EUROPÄISCHE PATENTANMELDUNG

(21) Anmeldenummer: 86103119.3

(22) Anmeldetag: 08.03.86

(51) Int. Cl.⁴: **B01D 53/34**

(30) Priorität: 16.04.85 DE 3513544

(43) Veröffentlichungstag der Anmeldung:
29.10.86 Patentblatt 86/44

(84) Benannte Vertragsstaaten:
AT BE CH DE FR GB IT LI NL SE

(71) Anmelder: WALTHER & CIE.
AKTIENGESELLSCHAFT
Waltherstrasse 51
D-5000 Köln 80 (Dellbrück)(DE)

(72) Erfinder: Baer, Edmund, Dr.-Ing.
Waldwinkel 101
D-5060 Bergisch Gladbach(DE)
Erfinder: Bechthold, Horst, Dr.-Ing.
Kiefernweg 10
D-5042 Erftstadt 23(DE) .

(54) Verfahren zur Abscheidung von Stickstoffoxiden aus bereits weitgehend in einer Waschstufe entschwefelten Rauchgase.

(57) Die Erfindung betrifft ein Verfahren zur Abscheidung. von Stickstoffoxiden aus bereits weitgehend entschwefelten Rauchgasen. Der NO-Anteil der Stickstoffoxide wird unter Einsatz von Ozon oder anderen Oxidantien zur Verbesserung der Wasserlöslichkeit in $NO_2$ übergeführt und der gesamte entschwefelte und aufoxidierte Gasstrom anschließend einem Waschprozeß unterworfen. In dem nachgeschalteten Waschprozeß wird der Waschlösung als reduzierend wirkende Substanzen Alkali-bzw. Erdalkalisulfite zugesetzt, die das in der Waschlösung absorbierte $NO_2$ zu $N_2$ reduzieren, wobei die reduzierend wirkenden Substanzen zu den entsprechenden Sulfaten oxidiert werden.

EP 0 199 037 A2

FIG. 1

## Verfahren zur Abscheidung von Stickstoffoxiden

Die Erfindung betrifft ein Verfahren zur Abscheidung von Stickstoffoxiden aus bereits weitgehend entschwefelten Rauchgasen, wobei der NO-Anteil der Stickstoffoxide unter Einsatz von Ozon oder anderen Oxidantien zur Verbesserung der Wasserlöslichkeit in $NO_2$ überführt und der gesamte Gasstrom anschließend einem Waschprozeß unterworfen wird.

Für die Entfernung von Stickoxiden aus Rauchgasen ist eine Reihe von Verfahren bekannt geworden, die ausnahmslos zu einem Entsorgungsproblem führen.

Insbesondere bei katalytischen Verfahren, die - scheinbar ohne Erzeugung eines Nebenproduktes arbeiten, wird das Problem der Beseitigung der verbrauchten Katalysatoren zunehmend an Bedeutung gewinnen. Diese Katalysatoren enthalten nämlich erhebliche Mengen an Schwermetallen, so daß sie nicht auf einer offenen Deponie abgelagert werden dürfen. Auch hier besteht -wie vielfach im Umweltschutz -die große Gefahr, daß ein Umweltproblem der Luft in ein Umweltproblem des Bodens oder des Wassers umgewandelt wird. Eine Regeneration dieser Katalysatoren oder eine Wiedergewinnung der Schwermetalle scheiden nach dem heutigen Stand der Technik aus Kostengründen aus.

Andere bekannte Verfahren arbeiten ohne Einsatz von Katalysatoren (DE -PS 32 2o 4o3). Der vorerwähnte Nachteil haftet diesem Verfahren also nicht an. Aber auch bei diesem Prozeß entsteht ein Nebenprodukt, ein hochwertiger Stickstoffdünger, der in dem vorhandenen Markt untergebracht werden muß. Wenn der Markt auch für die Aufnahme dieses Produktes aus einer Vielzahl von Anlagen ausreichend groß ist, so muß dieses Endprodukt doch unter erheblichem technischen Aufwand aus der Lösung gewonnen und in für die Anwendung geeignete Form gebracht werden. Diese "Nachbearbeitungs-Anlage" verursacht Investitions- und Betriebskosten.

Der Erfindung liegt die Aufgabe zugrunde, ein Verfahren zu schaffen, mit dem ein entschwefeltes Rauchgas derart entstickt wird, daß kein zusätzliches Nebenprodukt anfällt.

Diese Aufgabe wird dadurch gelöst, daß der Waschlösung als reduzierend wirkende Substanzen Alkali-bzw. Erdalkalisulfite zugesetzt werden, die das in der Wasch lösung absorbierte $NO_2$ zu $N_2$ reduzieren, wobei die reduzierend wirkenden Substanzen zu den entsprechenden Sulfaten oxidiert werden.

Die reduzierend wirkenden Substanzen können Calziumsulfit oder Magnesiumsulfit sein.

Das erfindungsgemäße Verfahren vermeidet mit einfachsten Mitteln die bekannten Nachteile, wenn es im Verbund mit einer Entschwefelung unter Einsatz von Alkali-oder Erdalkaliverbindungen eingesetzt wird. Alle Kalkwaschverfahren z.B. erzeugen als Endprodukt Gips in einer Menge, die von dem Schwefelgehalt der Rauchgase und deren Menge abhängt. Im Kalkwaschverfahren ist ein erheblicher Aufwand erforderlich, um das im Waschprozeß der Entschwefelung primär erzeugte Calziumsulfit durch Oxidation mit Luft in Calziumsulfat, das Endprodukt, zu überführen. Benutzt man nun, dem Gedanken der Erfindung folgend, das primär gebildete Calziumsulfit als Reduktionsmittel in dem erfindungsgemäßen Verfahren, so findet die ohnehin notwendige Oxidation des Calziumsulfits zu Calziumfulfat zumindest zu einem erheblichen Teil dadurch statt, daß in einer nachgeschalteten Waschstufe die Stickoxide unter Oxidation des Calziumsulfits zu Stickstoff reduziert werden. Bei der Stickoxidabscheidung fällt also erfindungsgemäß kein zusätzliches Abfallprodukt an. Aus der Verfahrenskombination "Entschwefelung plus Stickoxidabscheidung" entsteht als Nebenprodukt lediglich die ohnehin bei der Entschwefelung anfallende Gipsmenge, während die Stickoxide zu unschädlichem Stickstoff reduziert werden, der zusammen mit den Rauchgasen aus dem Kamin entlassen wird. Somit liegt hier das bisher einzige Verfahren zur Stickoxidabscheidung vor, bei dem keinerlei Nebenprodukte entstehen.

Das erfindungsgemäße Verfahren ist also besonders geeignet, in Verbindung mit bereits bestehenden oder noch zu bauenden Kalkwäschen zur Entschwefelung von Rauchgasen eingesetzt zu werden. Weltweit aber sind fast ausschließlich Kalkwäschen für die Entschwefelung im Einsatz. Auch in der Bundesrepublik sind im Zuge der Durchführung der Großfeuerungsanlagen-Verordnung ganz überwiegend Kalkwasch-Verfahren für den Einsatz vorgesehen. Die ebenfalls zwingend vorgeschriebene Abscheidung von Stickoxiden könnte nach diesem Stand der Marktentwicklung und dem heute bekannten Stand der Technik nur unter Einsatz von Katalysatortechnik vorgenommen werden und würde im außerordentlich großen Umfang zu den eingangs erwähnten Problemen der Katalysatorentsorgung führen.

Zudem reicht die vorhandene Weltkapazität zur Herstellung solcher Katalysatoren nur zur Versorgung eines vergleichsweise kleinen Teils der zu bauenden Stickoxidabscheider-Anlagen aus. Der Aufbau dieses Verfahrens aber ist besonders für die Nachrüstung bestehender Kalkwaschverfahren geeignet, so daß mit diesem Verfahren die o.g. Schwierigkeiten vermieden werden können.

Eine weitere vorteilhafte Ausgestaltung der Erfindung wird darin gesehen, daß das Waschverfahren zur Abscheidung von Stickstoffoxiden in Verbindung mit einem an sich bekannten Entschwefelungs-Verfahren unter Einsatz von Kalk oder Kalkstein eingesetzt wird, in welchem in einem Verfahrensschritt im wesentlichen Calziumsulfit entsteht, welches als reduzierend wirkende Substanz entnommen und in dem zur Abscheidung von Stickstoffoxiden vorgesehenen Waschverfahren eingesetzt wird.

Der innerhalb der $NO_x$-Waschstufe verbleibende Restgehalt anCalziumsulfit wird zu Calziumsulfat oxidiert. Dabei kann die Oxidierung in der Einrichtung für die Entschwefelung der Rauchgase oder aber in einer separaten Einrichtung erfolgen, und die dabei entstandene Calziumsulfatsuspension wird in der Einrichtung für die Entschwefelung der Rauchgase zu einem für die Vermarktung geeigneten Gips weiterverarbeitet.

Je nach der Prozeßführung des Entschwefelungsteils ist es möglich, daß sowohl ein gewisser Anteil an Calziumsulfat bereits in der "reduzierenden Substanz" enthalten ist, andererseits kann je nach pH-Wert und Ausnutzungsgrad des in der Entschwefelung zugesetzten Kalks oder Kalksteins ein gewisser Anteil von Restkalk enthalten sein. Insbesondere durch die Anwesenheit von Kalk oder Kalkstein kann der pH-Wert höher liegen, als dies für die Durchführung der Reduktionsreaktion in der Stickoxidwäsche erforderlich ist. Außerdem würden Kalk oder Kalksteinreste im Endprodukt "Gips" störend wirken, so daß sie auch aus diesem Grund umgeformt werden müssen.

Zu diesem Zweck wird an geeigneter Stelle Schwefelsäure zudosiert, die den Restkalk oder Kalksteingehalt direkt in Gips umformt. Die zugesetzte Schwefelsäuremenge wird zweckmäßigerweise über den sich danach einstellenden pH-Wert geregelt, der beispielsweise zwischen 2 und 7 liegen kann.

Zwei Ausführungsbeispiele der Erfindung sind in der Zeichnung dargestellt und nachfolgend näher beschrieben. Es zeigt

Fig. 1 die erfindungsgemäße Entstickung mit einem Zweikreisverfahren für die Entschwefelung und

Fig. 2 die erfindungsgemäße Entstickung mit einem Einkreisverfahren für die Entschwefelung.

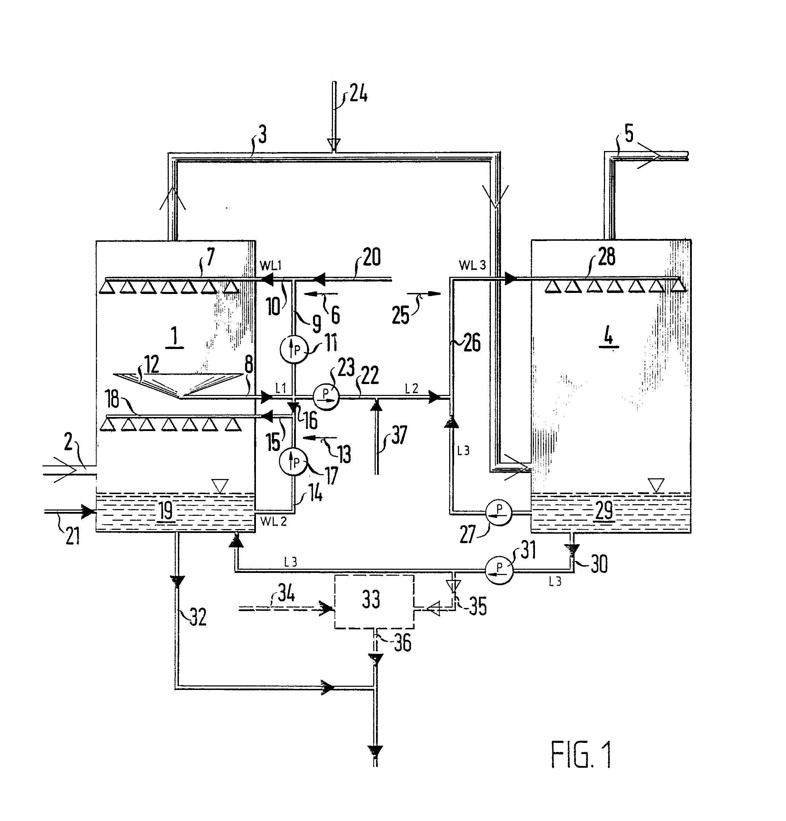

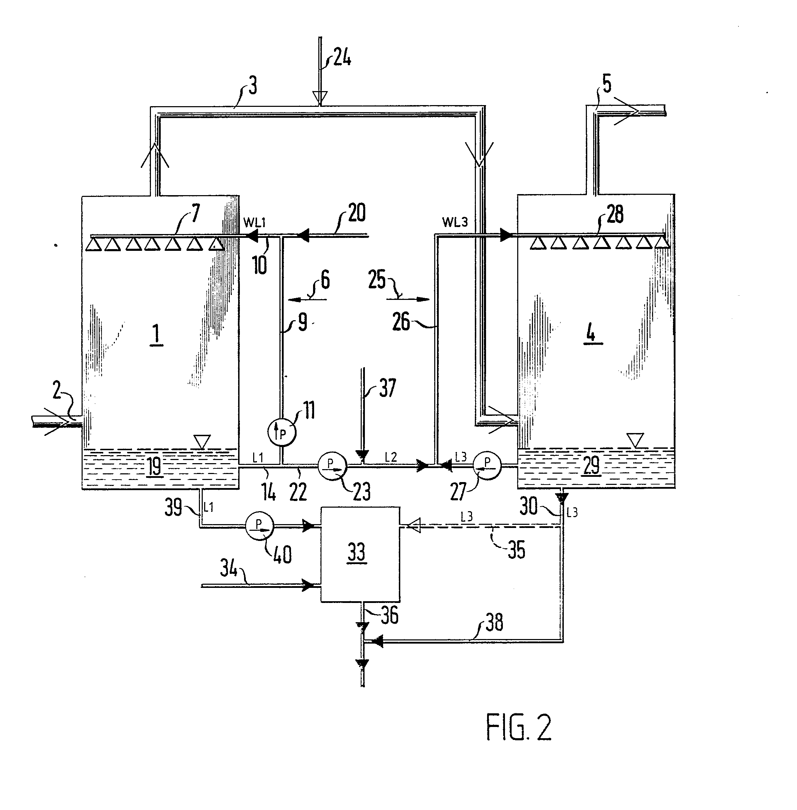

Die beiden Beispiele beziehen sich auf Kalk- oder Kalksteinwaschverfahren zur Rauchgasentschwefelung mit Endprodukt Gips. Die beiden Beispiele unterscheiden sich im wesentlichen dadurch, daß der Entstickungswaschstufe eine Rauchgasentschwefelung im Zweikreisverfahren vorgeschaltet ist (Fig. 1) bzw. eine Entschwefelungsanlage nach einem Einreisverfahren (Fig. 2). Die wesentlichen Verfahrens-und Anlagenelemente sind gleich.

Das in Entstaubungsanlagen weitgehend von Staub befreite Rauchgas tritt über eine Leitung 2 in einen Waschturm 1 des an sich bekannten Entschwefelungsteiles ein. Im Waschturm 1 wird das Rauchgas mit einer Waschlösung (WL1) in Kontakt gebracht, die im wesentlichen Kalziumverbindungen zur Absorption des $SO_2$ aus dem Rauchgas enthält.

In Fig. 1 wird der Waschlösungskreislauf 6, bestehend aus den Leitungen 8, 9 und 1o mit der Pumpe 11 und einem Sprühsystem 7 mit dem zu reinigenden Rauchgas in Kontakt gebracht. Durch Reaktion mit $SO_2$ entsteht eine Lösung (L1), die im wesentlichen Kalziumsulfit enthält und unverbrauchte Absorptionsmittel-Reste. Diese Lösung wird in einem Trichter 12 aufgefangen und mittels der Pumpe 11 dem Sprühsystem 7 erneut zugeführt. Dem oberen Waschlösungskreislauf 6 ist ein unterer Waschlösungskreislauf 13 zugeordnet, in dem in Art einer Vorreinigung durch die Waschlösung (WL2) ebenfalls $SO_2$d absorbiert wird. Dieser Waschlösungskreislauf 13 erfolgt über die Leitungen 14 und 15 mit der Pumpe 17 und dem Sprühsystem 18. Die Leitung 14 ist an einen Wäschersumpf 19 angeschlossen. Die Waschlösung - (WL2) besteht im wesentlichen bereits aus Kalziumsulfat, dem gewünsch ten Endprodukt Gips, und enthält nur vergleichsweise geringfügige Kalziumsulfitanteile, da im Wäschersumpf 19 zur Oxidation von Kalziumsulfit über eine Leitung 21 Luft zugeführt wird. Das Endprodukt Gips wird mittels einer Leitung 32 abgezogen.

Das entschwefelte Rauchgas wird mittels einer Leitung 3 aus dem Waschturm 1 abgezogen und einem nachgeschalteten Waschturm 4 für die Entstickung zugeleitet. Über eine Leitung 24 wird in das entschwefelte Rauchgas Ozon eingeführt. Dieser Verfahrensschritt ist erforderlich, da der wesentliche Anteil der Stickoxide, Stickstoffmonoxid, nur äußerst schwer wasserlöslich ist. Es wird deshalb vor Eintritt in den Stickoxid-Waschturm 4 durch die Zugabe von Ozon zu dem wesentlich besser löslichen Stickstoffdioxid oxidiert.

Erfindungsgemäß ist für die Reduktion des nunmehr gebildeten Stickstoffdioxid die reduzierende Substanz Kalziumsulfat erforderlich. Dieses wird aus dem Waschkreislauf 6 entnommen und einem Waschkreislauf 25 des Waschturmes 4 für die Entstickung zugeführt. Dazu ist eine Leitung 22 mit Pumpe 23 vorgesehen, die von der Leitung 9 ausgeht und in eine Leitung 26 des Kreislaufes 25 mündet. In die Leitung 26 ist eine Pumpe 27 eingebaut, außerdem ist die Leitung 26 in ein Sprühsystem 28 eingeleitet. Am Fuße des Waschturmes 4 befindet sich ein Wäschersumpf 29. Der Waschlösungskreislauf 25 dient im Waschprozeß der Stickoxidabscheidung als reduzierende Substanz. Durch den intensiven Kontakt mit dem Rauchgas im Waschturm 4 nimmt die kalziumsulfitenthaltende Waschlösung (WL3) $NO_2$ aus dem Rauchgas auf, welches innerhalb des Tropfens durch Reaktion mit Kalziumsulfit zu Stickstoff - ($N_2$) reduziert wird. Dabei oxidiert das Kalziumsulfit zu dem gewünschten Endprodukt der Verfahrenskombination, Kalziumsulfat. Die Waschlösung wird im Sumpf 29 des Turmes 4 gesammelt und mittels der Pumpe 27 umgepumpt, wobei stets neue Kalziumsulfitlösung (L1 bzw. L2) aus dem Entschwefelungsteil zugesetzt wird.

Aus dem Wäschersumpf 29 wird ein kleiner Teil der umlaufenden Lösung (L3) über eine Leitung 3o mittels einer Pumpe 31 abgezogen und entweder dem Sumpf 19 des Entschwefelungsturmes 1 oder alternativ einer getrennten Oxidationsstufe 33 zugeführt. In diesem Falle wird die Luft mittels einer Leitung 34 in die Oxidationseinrichtung 33 eingeführt, die über eine Zweigleitung 35 mit der Leitung 33 in Verbindung steht. Das entstandene Produkt Gips wird über die Abführleitung 36 abgezogen und kann der Leitung 32 zugeführt werden. Diese Oxidationsmaßnahme ist erforderlich, da im Normalfall ein Überschuß an Kalziumsulfit in der Waschlösung des Stickoxidabscheidungsteiles vorhanden ist. Dieser muß ebenfalls zu dem gewünschten Endprodukt Kalziumsulfat (Gips) oxidiert werden, um ein einheitliches und einwandfreies Endprodukt herstellen zu können.

Das gereinigte Rauchgas verläßt den Turm 24 des Entstickungsteiles über eine Leitung 5 und ist weitgehend frei von Schwefeldioxid und Stickoxiden. Der bei der Reduktion anfallende Stickstoff ist in diesem Rauchgas als unschädliches inertes Gas enthalten.

Der im Gesamtprozeß anfallende Gips wird -je nach Verfahrenswahl und wie vorstehend beschrieben -entweder aus dem Sumpf 19 oder aus der getrennten Oxidationsstufe 33 abgezogen und einer Nachbehandlung unterzogen. Diese Nachbehandlung ist Stand der Technik und im einzelnen nicht dargestellt.

Der aus dem Waschturm 1 entnommenen Kalziumsulfitlösung (L1) kann eine Schwefelsäure über eine Leitung 37 in die Leitung 22 zugesetzt werden. Diese Maßnahme kann erforderlich sein, wenn die Waschlösung (L1) einen zu großen Anteil an unverbrauchtem Kalziumhydroxid oder Kalziumcarbonat enthält. Beide Substanzen erhöhen den pH-Wert der Waschlösung. Dieser muß jedoch zur Durchführung der Oxidationsreaktion des Kalziumsulfits in bestimmten Grenzen gehalten werden, beispielsweise zwischen 2 bis 7. Normalerweise wird an dieser Stelle eine Schwefelsäuremenge zugegeben, die in Abhängigkeit vom pH-Wert des Waschkreislaufes im Stickoxid-Entfernungsturm 4 geregelt wird.

Das in Fig. 2 gezeigte Ausführungsbeispiel beschreibt ein sogenanntes Einkreisverfahren innerhalb des Entschwefelungsturmes 1, wobei die Waschlösung im Wäschersumpf 19 aufgefangen und ebenfalls mittels der Pumpe 11 dem Sprühsystem 7 zugeführt wird. Wie im Ausführungsbeispiel nach Fig. 1 wird auch hier der Waschlösung (WL1) ein frisches Absorptionsmittel, beispielsweise Kalziumhydroxid oder Kalziumcarbonat, zugeführt, um das durch die Reaktion mit $SO_2$ verbrauchte Absorptionsmittel zu ersetzen. Unterschiedlich zum Ausführungsbeispiel nach Fig. 1 ist hier die Luftzuführung für die Oxidation, dabei wird die Lösung mittels einer Leitung 39 und einer Pumpe 4o in den Oxidator 33 eingeführt und die Luft über Leitung 34 dem Oxidator 33 zugeleitet. Das hierbei entstehende Endprodukt wird wie im Ausführungsbeispiel nach Fig. 1 mittels der Leitung 36 abgezogen. Die aus dem Sumpf 29 abgezogene Lösung L3 kann entweder über eine Leitung 35 in den Oxidator 33 oder über eine Leitung 38 in die Leitung 36 geführt werden.

1 Waschturm für Entschwefelung

2 Rauchgaszuführung

3 Leitung für die entschwefelten Rauchgase

4 Waschturm für die Entstickung

5 Leitung für die Reingase

6 Waschlösungskreislauf I (WL1 + L1)

7 Sprühsystem I

8 -9 -1o Leitungen

11 Pumpe

12 Auffangtrichter

13 Waschlösungskreislauf II

14 -15 -16 Leitungen

17 Pumpe

18 Sprühsystem II

19 Wäschersumpf

2o Leitung für das Absorptionsmittel

21 Luftzuführung

22 Leitung (L1 oder L2)

23 Pumpe

24 Leitung für Ozonzuführung

25 Waschlösungskreislauf III (UL3)

26 Leitung

27 Pumpe

28 Sprühsystem III

29 Wäschersumpf

30 Leitung (L3)

31 Pumpe

32 Produktleitung

33 Oxidationsstufe

34 Luftleitung

35 Zuführungsleitung (L3)

36 Abführungsleitung (Produkt)

37 Säureleitung

38 Produktleitung

39 Leitung (L1)

4o Pumpe

**Ansprüche**

1. Verfahren zur Abscheidung von Stickstoffoxiden aus bereits weitgehend entschwefelten Rauchgasen, wobei der NO-Anteil der Stickstoffoxide unter Einsatz von Ozon oder anderen Oxidantien zur Verbesserung der Wasserlöslichkeit in $NO_2$ übergeführt und der gesamte Gasstrom anschließend einem Waschprozess unterworfen wird, dadurch gekennzeichnet, daß der Waschlösung als reduzierend wirkende Substanzen Alkali-bzw. Erdalkalisulfite zugesetzt werden, die das in der Waschlösung absorbierte $NO_2$ zu $N_2$ reduzieren, wobei die reduzierend wirkenden Substanzen zu den entsprechenden Sulfaten oxidiert werden.

2. Verfahren nach Anspruch 1, dadurch gekennzeichnet, daß die reduzierenden Substanzen Calziumsulfit bzw. Magnesiumsulfit sind.

3. Verfahren nach den Ansprüchen 1 und 2, dadurch gekennzeichnet, daß das Waschverfahren zur Abscheidung von Stickstoffoxiden in Verbindung mit einem an sich bekannten Entschwefelungs-Verfahren unter Einsatz von Kalk oder Kalkstein eingesetzt wird, in welchem in einem Verfahrensteilschritt im wesentlichen Calziumsulfit entsteht, welches als reduzierend wirkende Substanz entnommen und in dem zur Abscheidung von Stickstoffoxiden vorgesehenen Waschverfahren eingesetzt wird.

4. Verfahren nach den Ansprüchen 1 bis 3, dadurch gekennzeichnet, daß der in dem Verfahren innerhalb der $NO_x$-Waschstufe verbleibende Restgehalt an Calziumsulfit zu Calziumsulfat -oxidiert wird.

5. Verfahren nach Anspruch 4, dadurch gekennzeichnet, daß die in der $NO_x$-Waschstufe entstehende weitgehend oxidierte Waschlösung zwecks Oxidation des restlichen Calziumsulfitanteils in bestehende Einrichtungen des Entschwefelungsverfahrens zurückgeführt wird.

6. Verfahren nach Anspruch 4, dadurch gekennzeichnet, daß der Restgehalt an Calziumsulfit in einer separaten Einrichtung aufoxidiert wird.

7. Verfahren nach den Ansprüchen 4 bis 6, dadurch gekennzeichnet, daß die Nachoxidation der in der Entschwefelung oder in einer separaten Einrichtung entstandene Calziumsulfatsuspension in vorhandenen Einrichtungen des Entschwefelungsverfahrens zu einem für die Vermarktung geeigneten Gips weiterverarbeitet wird.

8. Verfahren nach den Ansprüchen 1 bis 7, dadurch gekennzeichnet, daß der dem Entschwefelungsverfahren entnommenen Calziumsulfitlösung Schwefelsäure zugesetzt wird.

FIG. 1

FIG. 2